(19) Europäisches Patentamt
European Patent Office
Office européen des brevets

(11) **EP 4 733 992 A1**

(12) **EUROPEAN PATENT APPLICATION**

(43) Date of publication:
**29.04.2026 Bulletin 2026/18**

(21) Application number: **25210323.9**

(22) Date of filing: **22.10.2025**

(51) International Patent Classification (IPC):
**G06N 3/0455** (2023.01)   **G06N 3/082** (2023.01)
**G06N 3/0495** (2023.01)   **G06N 3/02** (2006.01)

(52) Cooperative Patent Classification (CPC):
**G06N 3/082; G06N 3/0455; G06N 3/0495**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.10.2024 KR 20240146832
21.04.2025 KR 20250051613**

(71) Applicant: **Samsung Electronics Co., Ltd.
Suwon-si, Gyeonggi-do 16677 (KR)**

(72) Inventors:
• **SHIN, Seungjun
16678 Suwon-si (KR)**
• **OH, Jaehoon
16678 Suwon-si (KR)**
• **JANG, Dongwon
16678 Suwon-si (KR)**
• **HAN, Dasol
16678 Suwon-si (KR)**

(74) Representative: **Marks & Clerk LLP
15 Fetter Lane
London EC4A 1BW (GB)**

(54) **METHOD OF COMPRESSING LARGE LANGUAGE MODEL AND ELECTRONIC DEVICE PERFORMING THE SAME**

(57)    A method of compressing a large language model and an electronic device for performing the method are provided. A method of operating an electronic device includes receiving data by a neural network model including at least one transformer block and at least one operation block, and outputting an inference result for the data in the neural network model. The at least one operation block is configured to receive tokens generated based on the data as an input, and selectively perform an operation on at least one of the tokens based on an index of the tokens.

**FIG. 13**

**Description**

BACKGROUND

Methods and apparatuses consistent with embodiments relate to a method of compressing a large language model and an electronic device for performing the method.

A large language model (LLM) is a deep learning-based neural network model that is trained with very large-scale data. The LLM specializes in understanding and generating text data. The LLM has revolutionized the field of natural language processing, and is one of the key technologies that enables computers to understand and process human language. Representative LLMs include generative pre-trained transformers (GPT) and bidirectional encoder representations from transformers (BERT).

SUMMARY

One or more embodiments may address at least the above problems and/or disadvantages and other disadvantages not described above. Also, the embodiments are not required to overcome the disadvantages described above, and an embodiment may not overcome any of the problems described above.

According to an aspect of the present disclosure, a method of operating an electronic device includes receiving data by a neural network model including at least one transformer block and at least one operation block, and outputting an inference result for the data in the neural network model, wherein the at least one operation block is configured to receive tokens generated based on the data as an input, and selectively perform an operation on at least one of the tokens based on an index of the tokens.

Preferably, the at least one operation block is configured to perform the operation on an initial token corresponding to a first token based on the index of the tokens.

Preferably, the at least one operation block is configured to output remaining tokens other than an initial token corresponding to a first token, without modification, based on the index of the tokens.

The operation preferably includes an arithmetic operation.

Preferably, the operation is an addition operation that adds a predetermined value to an initial token corresponding to a first token based on the index of the tokens.

Preferably, the predetermined value is determined based on one or more biases representing a difference between an output and an input of one or more target transformer blocks replaced with the at least one operation block.

According to an aspect of the present disclosure, a method of operating an electronic device includes determining a bias representing a difference between an output and an input for each of a plurality of transformer blocks of a first neural network model, determining a target transformer block among the plurality of transformer blocks based on a target number of transformer blocks related to a compression degree of the first neural network model, and obtaining a second neural network model by performing compression on the first neural network model based on the bias.

The second neural network model preferably includes a first operation block replaced from the target transformer block through the compression, and the first operation block is preferably configured to perform an operation based on the bias of the target transformer block corresponding to the first operation block.

Preferably, the first operation block is configured to perform an addition operation based on the bias of the target transformer block replaced with the first operation block for an initial token among inputs of the first operation block, and transmit a result of performing the addition operation to a next layer.

Based on at least two target transformer blocks determined by the target number, being consecutive target transformer blocks, the second neural network model preferably includes a second operation block, in which the consecutive target transformer blocks performing an operation are replaced by merging the biases of the consecutive target transformer blocks.

The obtaining of the second neural network model preferably includes generating the second neural network model by performing structural pruning on at least one of the target transformer blocks determined by the target number in the first neural network model.

The obtaining of the second neural network model preferably includes generating the second neural network model by performing unstructured pruning on at least one of the target transformer blocks determined by the target number in the first neural network model.

The method preferably further includes determining whether a currently determined number of target transformer blocks has reached the target number; and based on the currently determined number of the target transformer blocks determined having not reached the target number, determining an additional target transformer block based on results of sequentially transforming any one of remaining transformer blocks, excluding the target transformer block determined so far, into a first operation block that only performs an addition operation on an initial token.

The determining of the target transformer block preferably includes determining whether the number of target transformer blocks determined so far has reached the target number, and when the number of the target transformer blocks determined so far has not reached the target number, additionally determining a target transformer block based on results of sequentially transforming any one of remaining transformer blocks excluding the target transformer block determined so far into a first operation block that only performs an addition operation on an initial token.

The additionally determining of the target transformer block preferably includes determining, as the target transformer block, the remaining transformer block that has the least effect on an output of the first neural network model when being transformed into the first operation block.

According to an aspect of the present disclosure, an electronic device includes a memory configured to store instructions, and at least one processor configured to execute the instructions. The instructions, when executed by the at least one processor individually and/or collectively, cause the electronic device to receive data by a neural network model including at least one transformer block and at least one operation block, and output an inference result for the data in the neural network model, the at least one operation block is configured to receive tokens generated based on the data as an input, and selectively perform an operation on at least one of the tokens based on an index of the tokens.

Preferably, the at least one operation block is configured to perform the operation on an initial token corresponding to a first token based on the index of the tokens.

Preferably, the at least one operation block is configured to output remaining tokens other than an initial token corresponding to a first token based on the index of the tokens as they are.

The operation preferably includes an arithmetic operation.

Preferably, the operation is an addition operation that adds a predetermined value to an initial token corresponding to a first token based on the index of the tokens.

Additional aspects of embodiments will be set forth in part in the description which follows and, in part, will be apparent from the description, or may be learned by practice of the disclosure.

BRIEF DESCRIPTION OF THE DRAWINGS

The above and/or other aspects will be more apparent by describing certain embodiments with reference to the accompanying drawings, in which:

FIG. 1 is a diagram illustrating an electronic device according to an embodiment;
FIG. 2 is a diagram illustrating an architecture of a neural network model according to an embodiment;
FIG. 3 is a diagram illustrating compression of a deep learning model according to an embodiment;
FIGS. 4 and 5 are diagrams illustrating an attention sink phenomenon according to an embodiment;
FIG. 6 is a flowchart illustrating a method of operating an electronic device according to an embodiment;
FIGS. 7 to 9 are diagrams illustrating simplification of a target transformer block according to an embodiment;
FIGS. 10 and 11 are diagrams illustrating inference using a second neural network model according to an embodiment; and
FIGS. 12 and 13 are flowcharts illustrating a method of operating an electronic device according to an embodiment.

DETAILED DESCRIPTION

The following detailed structural or functional description is provided as an example only and various alterations and modifications may be made to the embodiments. Accordingly, the embodiments are not construed as limited to the disclosure and should be understood to include all changes, equivalents, and replacements within the idea and the technical scope of the disclosure.

Although terms, such as first, second, and the like are used to describe various components, the components are not limited to the terms. These terms should be used only to distinguish one component from another component. For example, a first component may be referred to as a second component, or similarly, the second component may be referred to as the first component.

It should be noted that if it is described that one component is "connected," "coupled," or "joined" to another component, a third component may be "connected," "coupled," and "joined" between the first and second components, although the first component may be directly connected, coupled, or joined to the second component.

The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, should be construed to have meanings matching with contextual meanings in the relevant art, and are not to be construed to have an ideal or excessively formal meaning unless otherwise defined herein.

Hereinafter, embodiments will be described in detail with reference to the accompanying drawings. When describing the embodiments with reference to the accompanying drawings, like reference numerals refer to like elements and a repeated description related thereto will be omitted.

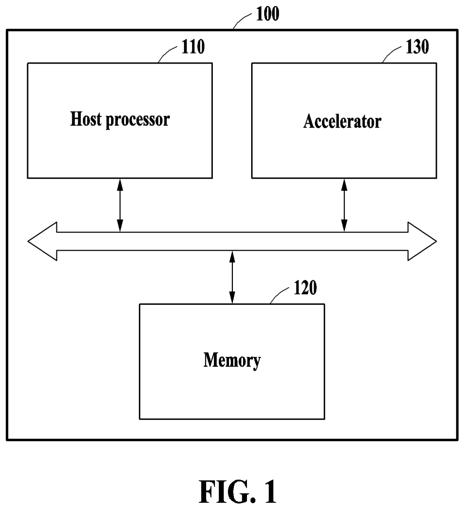

FIG. 1 is a diagram illustrating an electronic device according to an embodiment.

Referring to FIG. 1, an electronic device 100 may include a host processor 110, a memory 120, and an accelerator 130. The host processor 110, the memory 120, and the accelerator 130 may communicate with each other through a bus, a network on a chip (NoC), a peripheral component interconnect express (PCIe), and the like. In the example of FIG. 1, only the components related to the embodiments described herein are illustrated as being included in the electronic device 100. Thus, the electronic device 100 may also include other general-purpose components, in addition to the components illustrated in FIG. 1.

The host processor 110 may perform overall functions for controlling the electronic device 100. The host processor 110 may control the electronic device 100 overall by executing programs and/or instructions stored in the memory 120. The host processor 110 may be implemented as a central processing unit (CPU), a graphics processing unit (GPU), an application processor (AP), and the like, that are included in the electronic device 100, but embodiments of which are not limited thereto.

The memory 120 may be hardware for storing data processed in the electronic device 100 and data to be processed. In addition, the memory 120 may store an application, a driver, and the like to be driven by the electronic device 100. The memory 120 may include a volatile memory (e.g., dynamic random access memory (DRAM)) and/or a nonvolatile memory.

The electronic device 100 may include the accelerator 130 for an operation. The accelerator 130 may process tasks that may be more efficiently processed by a separate exclusive processor (that is, the accelerator 130), rather than by the general-purpose host processor 110, due to characteristics of the tasks. In an embodiment, a large language model (LLM) may be executed in the accelerator 130. In this case, one or more processing elements (PEs) included in the accelerator 130 may be used. The accelerator 130 may correspond to, for example, a neural processing unit (NPU), a tensor processing unit (TPU), a digital signal processor (DSP), a GPU, a neural engine, and the like that perform an operation according to a neural network.

A language model (LM) may include an LLM as a neural network model. The LLM is a type of neural network model that is a deep learning-based model trained with very large-scale data. The LLM specializes in understanding and generating text data. In order to improve performance, the LLM needs to include more parameters, and thus, may have a very large size. For example, the LLM may include several billions to hundreds of billions of parameters. Due to the large size of the LLM, hardware resources of the electronic device 100 for executing the LLM may be important in executing the LLM. For example, a random-access memory (RAM) with hundreds of gigabytes may be required for execution (e.g., inference) of the LLM. Accordingly, it may be difficult to execute the LLM on electronic devices that do not have sufficient hardware resources. Therefore, there are increasing attempts to compress the LLM while minimizing degradation of inference performance so that the LLM may be executed even on electronic devices with insufficient hardware resources.

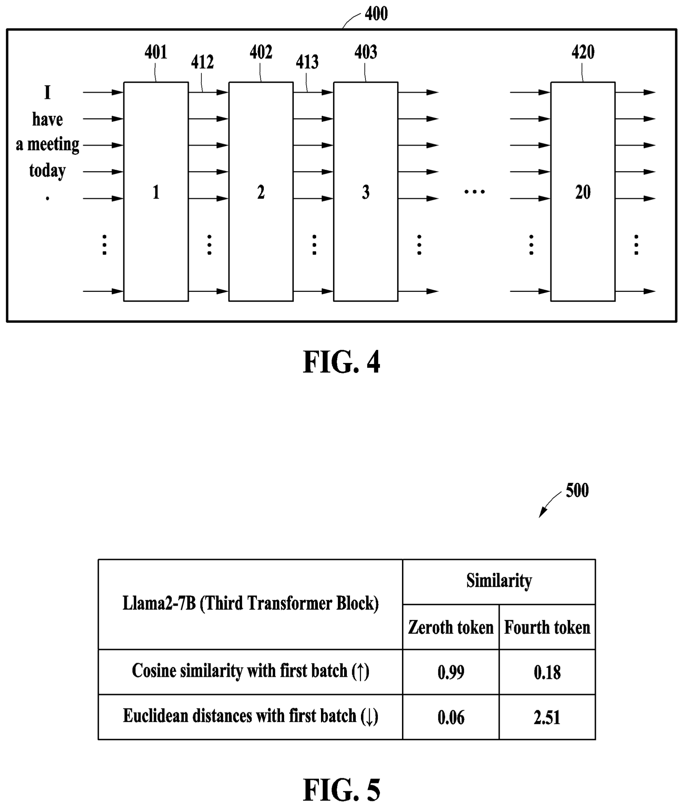

A method of compressing a neural network model described herein will be described below, starting with FIG. 4. The neural network model may be an LM or an LLM. The LM and the LLM are only different in scale, and it is apparent to those skilled in the art that the method of compressing a neural network may also be applied to the LLM and the LM.

Hereinafter, an architecture of a typical LLM will be described.

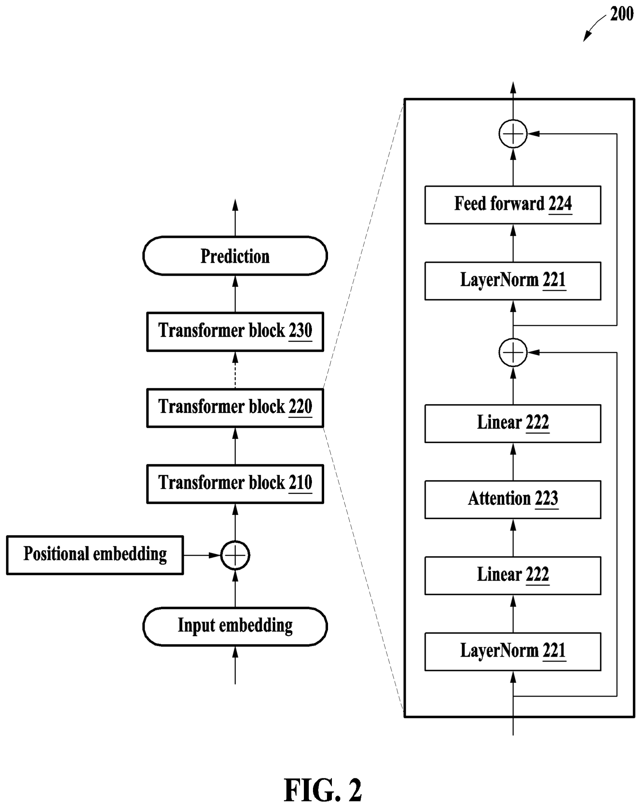

FIG. 2 is a diagram illustrating the architecture of a neural network model according to an embodiment.

Referring to FIG. 2, only transformer blocks that perform only decoding are illustrated for convenience of description. However, this is only an example to help understanding of the transformer blocks and should not be construed as limiting or restricting the scope of other embodiments. For example, the description of the present disclosure may be applied in the same manner even when a neural network model 200 (e.g., an LM or an LLM) includes a transformer block that performs only encoding. For example, the description of the present disclosure may be applied in the same manner even when the neural network model 200 includes both a transformer block that performs encoding and a transformer block that performs decoding.

In the neural network model 200, input embedding may represent an operation of converting a token (e.g., a word) into a vector form in a way that the neural network model 200 may understand. In order for a transformer block to handle sequential information, positional information (e.g., relative order information) of tokens may be required. In the neural network model 200, positional embedding may be an operation of adding positional information corresponding to a word (or a token) to a vector. The neural network model 200 may be an operation of training an input order of words through the positional embedding.

The neural network model 200 may include a plurality of transformer blocks 210, 220, and 230. The transformer block may be referred to as a transformer neural network. The transformer block 210 may receive a token on which the input embedding and the position embedding has been performed. The plurality of transformer blocks 210, 220, and 230 may be connected in series. For example, a transformer block may receive an output of a previous transformer as an input.

Each of the plurality of transformer blocks 210, 220, and 230 may include a plurality of layers. A block including an attention layer 223 and a feed forward layer 224 may be referred to as a transformer block. However, this is only an example to help understanding of the transformer block and should not be construed as limiting or restricting the scope of other embodiments. For example, the transformer block 220 may further include a normalization layer 221 and a linear layer 222.

The normalization layer 221 may stabilize training by normalizing an output of a previous layer. The linear layer 222 may perform linear transformation on an input and/or an output for the attention layer. For example, the linear layer 222 may be used to reconstruct an output of the attention layer 223 and match dimensions. The attention layer 223 may identify a relationship between input tokens using an attention mechanism. The feed forward layer 224 may perform additional nonlinear transformation after the attention mechanism is terminated.

However, the structure of the transformer block described above is merely an example and the present disclosure is not limited thereto. For example, the transformer block may include more or less layers than those illustrated in FIG. 2, and one or more transformer blocks may be defined as a high-level transformer block. For example, according to an embodiment, two or more consecutive transformer blocks illustrated in FIG. 2 may be defined as one high-level transformer block.

In the neural network model 200, an output layer (e.g., Prediction of FIG. 2) may generate a final prediction result based on an output of a last transformer block.

The performance of the neural network model 200 may be related to the number of transformer blocks. As the number of transformer blocks increases, the neural network model 200 may learn deeper. For example, as the number of transformer blocks increases, the neural network model 200 may learn more complicated contextual information, and learn correlations between tokens that are further apart in a long sentence. As the number of transformer blocks increases, the size of the neural network model 200 may increase. To execute the neural network model 200 with an increased size, more hardware resources of the electronic device may be required. An increase in hardware resources may refer to an increase in costs. Therefore, it may be necessary to compress an artificial intelligence model such as the neural network model 200 with a large size.

Hereinafter, a method of the related art of compressing an artificial intelligence model such as the neural network model 200 will be described.

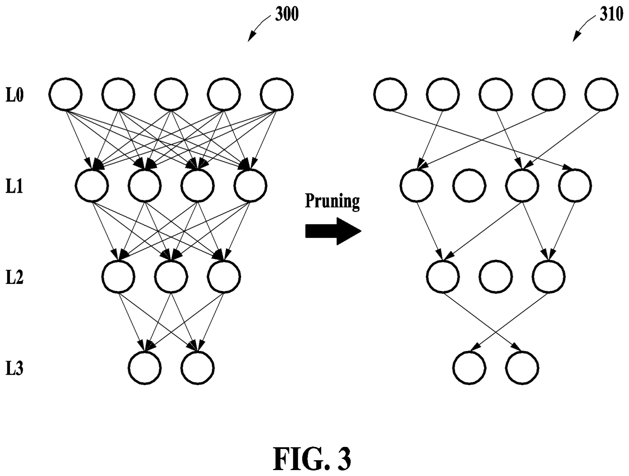

FIG. 3 is a diagram illustrating compression of a deep learning model according to an embodiment.

Referring to FIG. 3, a neural network model 300 (e.g., an LM or an LLM) according to an embodiment is illustrated. The neural network model 300 may include a plurality of layers (e.g., L0, L1, L2, and L3). Each layer may include a plurality of nodes (e.g., neurons). The node may be connected to a node of a next layer. The node may be connected to the connected node of the next layer via weights. A value input to the node may be multiplied by the weight and transferred to the next node.

Pruning may be performed to compress the neural network model 300. The pruning may be the process of removing unnecessary weights (e.g., parameters) from the neural network model 300. Unnecessary weights may be removed from the neural network model 300 through pruning. For example, a compressed neural network model 310 may be obtained in a state where the unnecessary weights are removed from the neural network model 300.

The pruning may be a widely used technique to improve efficiency and performance in the neural network model 300. Through the pruning, a size of the neural network model 300 may be reduced and an operation speed thereof may be increased.

The pruning may include unstructured pruning and structural pruning.

The unstructured pruning may be a method of removing an individual weight from the neural network model 300. For example, in the unstructured pruning, unnecessary or insignificant weights in the neural network model 300 may be selectively removed by removing weights having a value less than a threshold value. The unstructured pruning has the disadvantage of causing a complicated data access pattern because it removes individual weights by checking them one by one. In addition, in order to improve the operation speed through the unstructured pruning, it may be necessary to achieve a very high pruning percentage (e.g., 90%), which may be unsuitable for the compression of the neural network model 300.

The structural pruning may be a method of directly removing entire layers or channels from the neural network model 300. For example, the structural pruning may remove weights in a specific pattern (e.g., 2:4 pattern). When the weights are removed in a specific pattern, there may be a disadvantage that the operation speed increases only in a case of a very large batch size (e.g., 128) or more. For example, the structural pruning may entirely remove specific layers or channels (e.g., transformer blocks). The removal of the specific layers or channels may simplify the complexity of the neural network model 300 and save operation resources. However, when the specific layers or channels are removed entirely, the compressed neural network model 310 may not perform any important functions that the removed layers or channels performed, resulting in a degradation in performance.

Therefore, methods of compressing the neural network model 300 other than the pruning method described above may be required.

FIGS. 4 and 5 are diagrams illustrating an attention sink phenomenon according to an embodiment.

Referring to FIG. 4, a neural network model 400 (e.g., an LM or an LLM) including a plurality of transformer blocks 401, 402, 403, and 420 is illustrated. In this disclosure, for convenience of description, components other than the transformer blocks are omitted in the architecture of the neural network model 400. Therefore, it is apparent to those skilled in the art that the neural network model 400 may further include components other than the components shown in FIG. 4.

The transformer block 401 may be disposed first in the neural network model 400. The transformer block 401 may receive tokens. When a sentence is input, the neural network model 400 may divide the sentence into words, partial words, or characters as tokens. For example, when a sentence "I have a meeting today." is received, the neural network model 400 may divide the sentence into "I," "have," "a meeting," "today," and "." as tokens.

The tokens may be input to the transformer block 401. Among the tokens input into the transformer block 401, the earliest token may be referred to as an initial token. A first token among the tokens input to the transformer block 401 may be the initial token. Based on the index of the tokens input to the transformer block 401, the first token may be the initial token. For example, when the index of the tokens start from "0," the token with the index "0" may be the initial token. For example, in the sentence above, "I" may be the initial token.

Among tokens input to the subsequent transformer blocks 402, 403, and 420 in addition to the transformer block 401, which is the first block disposed in the neural network model 400, a token corresponding to a first token based on the index of the tokens may be the initial token. For example, among the tokens input to the transformer block 402, a token 412 may be a token corresponding to the first token, the initial token.

The position of the initial token may be the same for each transformer block. The position of the initial token may be the same as the first token among the tokens input to each transformer block. For example, the initial token of the transformer block 401 may be "I," the initial token of the transformer block 402 may be the token 412, the initial token of the transformer block 403 may be a token 413, and the position of the initial token may be the same as that of the first token. The first token may refer to the first based on the index of the tokens.

The initial token may significantly affect the performance of the neural network model 400. The phenomenon, in which the initial token significantly affects the performance of the neural network model 400, may be referred to as an "attention sink" phenomenon (thesis "Efficient Streaming Language Models with Attention Sinks (ICLR 2024)"). The "attention sink" phenomenon is the phenomenon in which the neural network model 400 pays high attention to the initial token of the input. The neural network model 400 may pay high attention to the initial token after few initial transformer blocks. As the neural network model 400 pays more attention to the initial token, a value of the initial token updated after passing through the transformer block may have a nearly fixed value regardless of the input. For example, regardless of what sentence is input to the neural network model 400, a value of the initial token updated after passing through the transformer block may be nearly constant after the few initial transformer blocks.

When a change between an input $h_k$ of a k-th transformer block and an input $h_{k+1}$ of a (k+1)-th transformer block (or an output of the k-th transformer block) is $\Delta_k$, $\Delta_k$ may refer to a value updated in the k-th transformer block. For example, $\Delta_k$ may be almost constant for the initial token regardless of what sentence is input to the neural network model 400.

Referring to FIG. 5, a table 500 showing results of an experiment performed using data having a batch size of 100 for Llama2-7B, which is a neural network model (e.g., an LM or an LLM), is illustrated. The table 500 may show a similarity between a value updated for a zeroth token in a third transformer block when a first batch is input, and a value updated for the zeroth token in the third transformer block when a second batch is input. The table 500 may show a similarity between a value updated for a fourth token in the third transformer block when the first batch is input, and a value updated for the zeroth token in a fourth transformer block when a second batch is input. An index of token may start from 0. The zeroth token in the table 500 may correspond to the initial token.

Cosine similarity is a method of measuring a similarity using an angle between two vectors. In cosine similarity, as two vectors point directions that are close to the same direction, the cosine similarity may become closer to 1, and as two vectors point directions that are close to opposite directions, the cosine similarity may become closer to -1. For example, the cosine similarity closer to 1 may indicate similarity, and the cosine similarity closer to -1 may indicate dissimilarity.

A method using the Euclidean distance may be a method of measuring a similarity using a straight-line distance between two points (or two vectors). The Euclidean distance being closer to 0 may indicate that two points (or vectors) are similar.

Referring to the table 500, the cosine similarity of the zeroth token may be 0.99, which is similar to 1, and the Euclidean distance may be 0.06, which is similar to 0. For example, it may indicate that a value updated by the third transformer block for the zeroth token when the first batch is input is similar to a value updated by the third transformer block for the zeroth token when the second batch is input.

Referring to the table 500, the cosine similarity of the fourth token may be 0.18, which is not similar to 1, and the Euclidean distance may be 2.51, which is not similar to 0. For example, it may indicate that a value updated by the third transformer block for the fourth token when the first batch is input is not similar to a value updated by the third transformer block for the fourth token when the second batch is input.

In conclusion, it may be found that the neural network model pays high attention to the initial token according to the "attention sink" phenomenon, and the transformer block updates similar values for the initial token regardless of the input. Hereinafter, a simplification (e.g., compression) method of the neural network model of updating only an initial token which significantly affects performance according to the characteristics described above will be described.

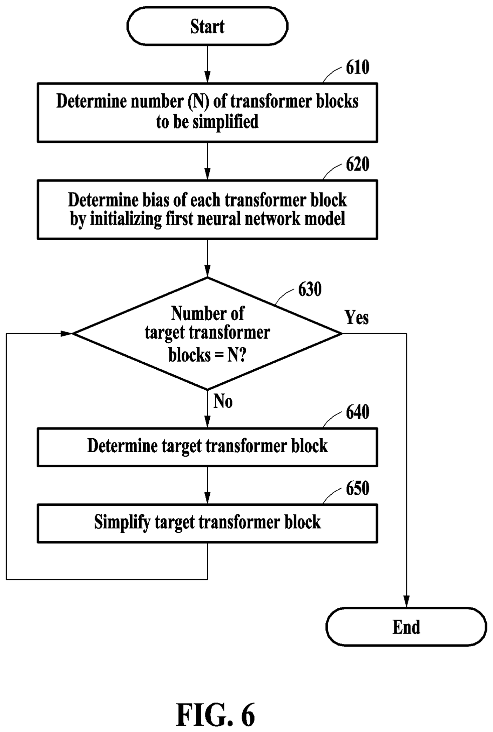

FIG. 6 is a flowchart illustrating a method of operating an electronic device according to an embodiment.

In the following embodiments, operations may be performed sequentially, but not necessarily performed sequentially. For example, the order of the operations may be changed and at least two of the operations may be performed in parallel. Operations shown in FIG. 6 may be performed by at least one component of an electronic device. For example, the electronic device may include a memory that stores instructions. When the instructions are executed individually and/or collectively by at least one processor, the electronic device may perform the following operations.

In operation 610, the electronic device may determine the number (N) of transformer blocks to be simplified.

The simplifying may refer to compression of a model (e.g., an LM, LLM, or neural network model). The simplifying may refer to model compression, which simplifies operations a model (e.g., an LM, LLM, or neural network model).

The electronic device may determine the number of transformer blocks to be transformed into operation blocks for the neural network model. The number of transformer blocks to be transformed into the operation blocks may be referred to as a target number. The target number may be related to a compression degree of a first neural network model.

Herein, a neural network model to be compressed may be referred to as the first neural network model (e.g., a first LM or a first LLM), and a model obtained by compressing the first neural network model may be referred to as a second neural network model (e.g., a second LM or a second LLM). The electronic device may determine the number of transformer blocks to be transformed into the operation blocks among the plurality of transformer blocks included in the first neural network model. For example, the electronic device may determine the number of transformer blocks to be transformed into the operation blocks as N. The electronic device may determine a target transformer block among the plurality of transformer blocks based on the target number.

The electronic device may determine the target number based on the hardware resources of a device for executing the second neural network model. The electronic device may determine the target number based on at least one of a throughput and memory constraints of the device for executing the second neural network model. The throughput may refer to the amount of work (e.g., number of data samples) that a device for executing the second neural network model is able to process within a given time (e.g., x seconds). The memory constraints may refer to a size of a storage space and/or a size of a RAM of the device for executing the second neural network model.

For example, when the size of the RAM for executing the first neural network model is 256 gigabytes (GB), while the size of the RAM of the device for executing the second neural network model is 128 GB, the electronic device may determine the target number based on the memory constraints.

According to embodiments, operation 610 may be omitted. The target number may be predetermined, and when the target number is predetermined, operation 610 may be omitted. For example, the target number may be predetermined by a user who wishes to compress the first neural network model.

In operation 620, the electronic device may determine a bias of each transformer block by initializing the first neural network model.

Initialization may be an operation of determining the bias of each transformer block. The electronic device may determine a bias indicating a difference between an output and an input for each of the plurality of transformer blocks included in the first neural network model.

The electronic device may input a beginning of sentence (BOS) token for the first neural network model. The BOS token may be a token that informs the start of a sentence to the first neural network model. The electronic device may initialize the first neural network model by inputting the BOS token to the first neural network model. The electronic device may determine a bias of each of the transformer blocks based on the initialized first neural network model.

The bias of each of the transformer blocks may be a change (e.g., $\Delta_k$ of FIG. 4) between an initial token input to the transformer block and an output corresponding to the initial token output by the transformer block.

The bias of each of the transformer blocks may be determined by a difference between an initial token input to the transformer block and an output corresponding to the initial token output by the transformer block. For example, referring to FIG. 4, a bias of the second transformer block 402 may be a difference between an initial token (e.g., the token 412) input to the transformer block 402 and an output (e.g., the token 413) corresponding to the initial token (e.g., the token 412) output by the transformer block 402.

In operation 630, the electronic device may determine whether the number of target transformer blocks has reached N.

The target transformer block may indicate a transformer block determined for compression among a plurality of transformer blocks included in the first neural network model. The electronic device may determine whether the number of target transformer blocks determined so far has reached the target number.

When the number of target transformer blocks determined so far is m, the electronic device may determine whether m = N.

When the number of target transformer blocks determined so far has reached the target number, the electronic device may end the compression. When the number of target transformer blocks determined so far has not reached the target number, the electronic device may perform operation 640.

The electronic device may repeat operations 640 to 660 until the number of target transformer blocks determined so far reaches the target number.

In operation 640, the electronic device may determine a target transformer block.

Hereinafter, the case where the number (e.g., m) of target transformer blocks determined so far is 1 or more.

In operation 640, the target transformer blocks determined so far may be in a compressed state according to operation 650. The target transformer block determined so far may be transformed into an operation block according to operation 650. The operation block may perform operations only on the initial token by using the bias of the target transformer block transformed into the operation block.

For example, assuming that the number of target transformer blocks determined so far is m, m (e.g., m is a natural number greater than or equal to 1) operation blocks may be included in an intermediate neural network model. The intermediate neural network model is a neural network model generated in the process of compressing the first neural network model into the second neural network model, and at least one target transformer block determined so far may be transformed into an operation block.

For example, it is assumed that a total number of transformer blocks in the first neural network model is M, and the number of target transformer blocks determined so far is m. The intermediate neural network may include m operation blocks and (M - m) remaining transformer blocks. M is a natural number greater than m.

In operation 640, the electronic device may additionally determine a target transformer block. The electronic device may sequentially compress the remaining transformer blocks included in the intermediate neural network model one by one to generate a plurality of compressed intermediate neural network models. The remaining transformer blocks may be transformer blocks included in the intermediate neural network, and may refer to candidates that may be determined as target transformer blocks.

The electronic device may sequentially compress the remaining transformer blocks of the intermediate neural network model one by one to generate a plurality of compressed intermediate neural network models in which one different remaining transformer block is transformed into an operation block.

For example, it is assumed that the intermediate neural network includes m operation blocks and (M - m) remaining transformer blocks. M is a natural number greater than m. The remaining transformer blocks may be sequentially compressed one by one to generate (M - m) compressed intermediate neural network models. For example, a first compressed intermediate neural network model may be a first remaining transformer block among the remaining transformer blocks that is transformed into an operation block, and a second compressed intermediate neural network model may be a second remaining transformer block among the remaining transformer blocks that is transformed into an operation block.

The electronic device may determine the target transformer block based on the plurality of compressed intermediate neural network models generated by sequentially transforming the remaining transformer blocks into operation blocks one by one. The electronic device may additionally determine a target transformer block based on the performance of the plurality of compressed intermediate neural network models. The electronic device may determine, as the target transformer block, the remaining transformer block that has the least effect on an output (e.g., performance or accuracy) even if it is transformed into an operation block.

The electronic device may compare the performance of the intermediate neural network model with the performance of the plurality of compressed intermediate neural network models. The electronic device may compare the performance of the intermediate neural network model with the performance of the plurality of compressed intermediate neural network models to determine the compressed intermediate neural network model with the least change in performance. The remaining transformer block transformed into an operation block in the compressed intermediate neural network model with the least change in performance may be determined as the target transformer block.

For example, it is assumed that the compressed intermediate neural network model generated as the second remaining transformer block among the remaining transformer blocks is transformed into the operation block has the least change in performance. The electronic device may determine the second remaining transformer block among the remaining transformer blocks as the target transformer block.

Hereinafter, a case without at least one target transformer block determined so far will be described.

According to an embodiment, at least one target transformer block determined so far may not exist. For example, when the number of target transformer blocks determined so far is m, m may be 0.

The electronic device may determine the target transformer block from among the remaining transformer blocks excluding the target transformer block determined so far. Since the number of target transformer blocks determined so far is 0, the remaining transformer blocks may be a plurality of transformer blocks included in the first neural network. Since the number of target transformer blocks determined so far is 0, the electronic device may sequentially compress the plurality of transformer blocks included in the first neural network model one by one to generate a plurality of compressed first neural network models. The electronic device may sequentially compress the plurality of transformer blocks included in the first neural network model one by one to generate a plurality of compressed first neural network models in which one different transformer block is transformed into an operation block.

For example, it is assumed that the total number of transformer blocks in the first neural network model is M. M is a natural number greater than or equal to 1. The electronic device may sequentially compress the plurality of transformer blocks one by one to generate M compressed first neural network models.

The electronic device may determine the target transformer block based on the plurality of compressed first neural transformer models generated by sequentially transforming the plurality of transformer blocks into operation blocks one by one. The electronic device may determine the target transformer block based on the performance of the plurality of compressed first neural transformer models. The electronic device may determine, as the target transformer block, the transformer block that has the least effect on an output (e.g., performance or accuracy) even if it is transformed into an operation block.

The electronic device may compare the performance of the first neural network model with the performance of the plurality of compressed first neural network models. The electronic device may compare the performance of the first neural network model with the performance of the plurality of compressed first neural network models to determine the compressed first neural network model with the least change in performance. The transformer block transformed into an operation block in the compressed first neural network model with the least change in performance may be determined as the target transformer block.

For example, it is assumed that the compressed first neural network model generated as the second transformer block among the transformer blocks is transformed into the operation block has the least change in performance. The electronic device may determine the second transformer block among the plurality of transformer blocks as the target transformer block.

In operation 650, the electronic device may simplify the target transformer block.

The electronic device may compress the target transformer block determined in operation 640. The electronic device may transform the target transformer block into the operation block through compression. The electronic device may replace the target transformer block with the operation block through compression.

Compression may include transformation of a transformer block into an operation block. The operation block may perform operations based on the bias of the transformer block transformed into that operation block only for the initial token. The electronic device may transform the target transformer block into an operation block that performs an operation based on a bias of the target transformer block only for the initial token. The operation may include arithmetic operations. The operation may include an addition operation that adds a predetermined value to the initial token. The predetermined value may be the bias of a transformer block transformed into an operation block.

According to an embodiment, structural pruning and/or unstructured pruning may be further performed in addition to the transformation into the operation block for the determination and simplification of the target transformer block. Hereinafter, a method using at least one of structural pruning, unstructured pruning, and transformation into an operation block in a compression manner will be described.

The structural pruning may include pruning methods such as removing weights in a specific pattern and entirely removing a target transformer block, as described above with reference to FIG. 3. The unstructured pruning may include methods such as removing individual weights as described above with reference to FIG. 3. The transformation into the operation block may refer to transformation of a transformer block into an operation block that performs an operation based on a bias of the corresponding transformer block only for an initial token. The electronic device may determine the target transformer block based on the compression method including at least one of structural pruning, unstructured pruning, and transformation into an operation block.

Hereinafter, it is assumed that the number (e.g., m) of target transformer blocks determined so far is 1 or more, and structural pruning, unstructured pruning, and transformation into an operation block are used as a compression method. However, it is obvious to those skilled in the art that the following description may also be applied when the compression method includes at least one of structural pruning, unstructured pruning, and transformation into an operation block.

In operation 640, the target transformer block determined so far may be in a compressed state according to operation 650. The target transformer block determined so far may be in a state compressed by a target compression method used to determine the target transformer block according to the operation 650.

For example, assuming that the number of target transformer blocks determined so far is m, m (e.g., m is a natural number greater than or equal to 1) compressed target transformer blocks may be included in the intermediate neural network model. The compressed target transformer block may be compressed by performing structural pruning, unstructured pruning, or transformation into an operation block. The compressed target transformer block may be compressed by the target compression method used to determine the target transformer block. The intermediate neural network model is a neural network model generated in the process of compressing the first neural network model into the second neural network model, and at least one target transformer block determined so far may be in a state compressed by the target compression method used to determine the target transformer block.

For example, it is assumed that the total number of transformer blocks in the first neural network model is M, and the number of target transformer blocks determined so far is m. The intermediate neural network may include m compressed target transformer blocks and (M - m) remaining transformer blocks. M is a natural number greater than m.

In operation 640, the electronic device may additionally determine the target transformer block. The electronic device may sequentially compress the remaining transformer blocks included in the intermediate neural network model one by one according to the compression method to generate a plurality of compressed intermediate neural network models. The remaining transformer blocks may be transformer blocks included in the intermediate neural network, and may refer to candidates that may be determined as target transformer blocks. The electronic device may sequentially compress the remaining transformer blocks one by one according to the compression method to generate a plurality of compressed intermediate neural network models in which each remaining transformer block is compressed with a different compression method.

For example, it is assumed that the intermediate neural network includes m operation blocks and (M - m) remaining transformer blocks. M is a natural number greater than m. The remaining transformer blocks may be sequentially compressed one by one according to the compression method to generate 3(M - m) compressed intermediate neural network models. Since the compression method includes three methods (e.g., structural pruning, unstructured pruning, and transformation an operation block), 3(M - m) compressed intermediate neural network models may be generated. For example, a first (M - m) compressed intermediate neural network model may be a structurally pruned last remaining transformer block among the remaining transformer blocks. For example, a second (M - m) compressed intermediate neural network model may be an unstructured-pruned last remaining transformer block among the remaining transformer blocks. For example, a third (M - m) compressed intermediate neural network model may be a last remaining transformer block transformed into an operation block among the remaining transformer blocks.

The electronic device may determine the target transformer block based on the plurality of compressed intermediate neural network models generated by sequentially compressing the remaining transformer blocks one by one according to the compression method. The electronic device may additionally determine the target transformer block based on the performance of the plurality of compressed intermediate neural network models. The electronic device may determine the target compression method and the target transformer block that have the least effect on an output (e.g., performance or accuracy).

The electronic device may compare the performance of the intermediate neural network model with the performance of the plurality of compressed intermediate neural network models. The electronic device may compare the performance of the intermediate neural network model with the performance of the plurality of compressed intermediate neural network models to determine the compressed intermediate neural network model with the least change in performance. The remaining transformer block compressed in the compressed intermediate neural network model with the least change in performance may be determined as the target transformer block, and the method, by which the compressed remaining transformer block is compressed, may be determined as the target compression method.

For example, it is assumed that the compressed intermediate neural network model generated by unstructured pruning of the second remaining transformer block among the remaining transformer blocks has the least change in performance. The electronic device may determine the second remaining transformer block among the remaining transformer blocks as the target transformer block, and determine the unstructured pruning as the target compression method for the target transformer block.

Hereinafter, a case without at least one target transformer block determined so far will be described. It is assumed that the structural pruning, the unstructured pruning, and the transformation into an operation block are used as the compression method. However, it is obvious to those skilled in the art that the following description may also be applied when the compression method includes at least one of structural pruning, unstructured pruning, and transformation into an operation block.

According to an embodiment, at least one target transformer block determined so far may not exist. For example, when the number of target transformer blocks determined so far is m, m may be 0.

Since the number of target transformer blocks determined so far is 0, the electronic device may sequentially compress the plurality of transformer blocks included in the first neural network model one by one according to the compression method to generate a plurality of compressed first neural network models. The electronic device may sequentially compress the plurality of transformer blocks included in the first neural network model one by one according to the compression method to generate a plurality of compressed first neural network models in which transformer blocks are compressed by different compression methods.

For example, it is assumed that the total number of transformer blocks in the first neural network model is M. M is a natural number greater than or equal to 1. The electronic device may sequentially compress the plurality of transformer blocks one by one according to the compression method to generate 3M compressed first neural network models. Since the compression method includes three methods (e.g., structural pruning, unstructured pruning, and transformation an operation block), 3M compressed first neural network models may be generated. For example, a first M compressed first neural network model may be a structurally pruned last transformer block among the transformer blocks. For example, a second M compressed first neural network model may be an unstructured-pruned last transformer block among the transformer blocks. For example, a third M compressed first neural network model may be a last transformer block transformed into an operation block among the transformer blocks.

The electronic device may determine the target transformer block based on the plurality of compressed first neural transformer models generated by sequentially compressing the plurality of transformer blocks one by one according to the compression method. The electronic device may determine the target transformer block based on the performance of the plurality of compressed first neural transformer models. The electronic device may determine, as the target transformer block, the transformer block that has the least effect on an output (e.g., performance or accuracy) even if it is compressed.

The electronic device may compare the performance of the first neural network model with the performance of the plurality of compressed first neural network models. The electronic device may compare the performance of the first neural network model with the performance of the plurality of compressed first neural network models to determine the compressed first neural network model with the least change in performance. The transformer block compressed in the compressed first neural network model with the least change in performance may be determined as the target transformer block, and the method, by which the compressed transformer block is compressed, may be determined as the target compression method.

For example, it is assumed that the compressed first neural network model generated by unstructured pruning of the second transformer block among the transformer blocks has the least change in performance. The electronic device may determine the second transformer block among the plurality of transformer blocks as the target transformer block, and determine the unstructured pruning as the target compression method.

In operation 650, the electronic device may simplify the target transformer block.

The electronic device may compress the target transformer block determined in operation 640 by the target compression method. The target compression method is the compression method used to determine the target transformer block, and may include the structural pruning, the unstructured pruning, or the transformation into an operation block.

For example, the electronic device may compress the target transformer block using the target compression method, the structural pruning. For example, the electronic device may compress the target transformer block using the target compression method, the unstructured pruning. For example, the electronic device may compress the target transformer block by transforming it into an operation block.

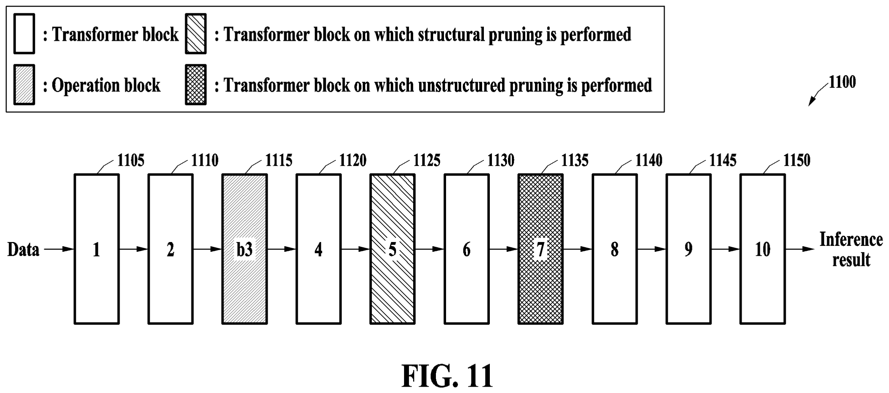

A second neural network model compressed using at least one of the structural pruning, the unstructured pruning, and the transformation into an operation block as the compression method will be described later with reference to FIG. 11.

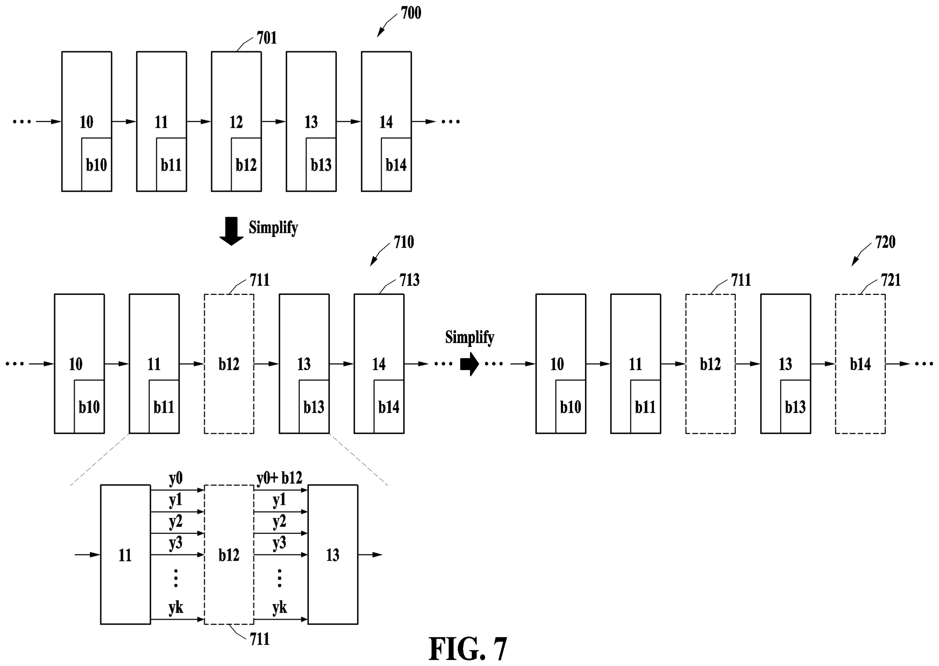

FIGS. 7 to 9 are diagrams illustrating simplification of a target transformer block according to an embodiment.

Referring to FIG. 7, a diagram showing only some of a plurality of transformer blocks included in a first neural network model 700 (e.g., a first LM or a first LLM) is illustrated. For example, only tenth to fourteenth transformer blocks in the neural network model of FIG. 4 are illustrated. However, this is merely an example and it is apparent to those skilled in the art that the description of the present disclosure may also be applied to neural network models having fewer or more than 20 transformer blocks.

The first neural network model 700 may be in an initialized state. The electronic device may determine a bias of each transformer block through the initialization of the first neural network model 700. For example, the first neural network model may be in a state in which a bias of each transformer block is determined by receiving a BOS token by the first neural network model. The bias may be a change between an initial token input to the transformer block and an output corresponding to the initial token output by the transformer block. For example, $b_{10}$ is a bias of a tenth transformer block, which may be a change between an initial token input to a tenth transformer block and an output corresponding to an initial token output by the tenth transformer block.

According to an embodiment, the bias may be updated. The electronic device may perform an update (e.g., fine tuning) to the first neural network model. For example, the electronic device may impart additional capabilities to the first neural network model by adding small parameters relative to the size of the first neural network model, using methods such as low-level adaptation (LoRA) and data-efficient low-rank adaptation (DoRA). The electronic device may perform the update by performing fine tuning of the bias together with the addition of the parameters.

The electronic device may determine a target transformer block. For example, the electronic device may determine a transformer block 701 as the target transformer block. The electronic device may determine the target transformer block based on FIG. 6. For example, the electronic device may sequentially simplify (e.g., model-compress) a plurality of transformer blocks, and determine a transformer block that has the least effect on the output of the first neural network model 700 as the target transformer block.

The electronic device may perform compression for the transformer block 701. For example, the electronic device may transform the transformer block 701 into an operation block 711. The operation block 711 may perform an operation based on the bias of the corresponding transformer block 701. For example, the operation block 711 may perform an arithmetic operation based on a bias (e.g., b12) of the corresponding transformer block 701. The arithmetic operation may be addition.

The operation block 711 may output the remaining tokens other than an initial token corresponding to a first token based on the index of the tokens, as they are. The operation block 711 may bypass the operation without performing the operation for the remaining tokens other than an initial token corresponding to a first token based on the index of the tokens.

The operation block 711 may perform an operation of adding 0 to the remaining tokens other than an initial token corresponding to a first token based on the index of the tokens. The operation block 711 may perform an operation of adding 0 to the remaining tokens other than an initial token corresponding to a first token based on the index of the tokens and output the remaining tokens as they are.

The operation block 711 may transfer a result of performing the operation to a next layer. The next layer may include at least one of a next operation block, a next transformer block, and an output layer.

Referring to FIG. 7, an intermediate neural network model 710 in which the transformer block 701 is replaced with the operation block 711 is illustrated. In the intermediate neural network model 710, the operation block 711 may receive an initial token (e.g., y0). The operation block 711 may perform addition of a bias (e.g., b12) of the corresponding transformer block 701 to the initial token (e.g., y0). The operation block 711 may perform transfer to a next transformer block without performing any operation to tokens other than the initial token among the inputs.

The electronic device may determine whether the number of target transformer blocks has reached the target number. When the number of target transformer blocks has not reached the target number, the electronic device may determine the target transformer block again. The electronic device may determine the target transformer block based on FIG. 6. For example, the electronic device may determine a transformer block 713 as the target transformer block in the intermediate neural network model 710 in which the transformer block 701 is replaced with the operation block 711. The electronic device may transform the transformer block 713 into an operation block 721.

Referring to FIG. 7, an intermediate neural network model 720 in which the transformer block 713 is transformed into the operation block 721 is illustrated. The operation block 721 may perform addition of the bias (e.g., b14) of the corresponding transformer block 713 to the operation block 721 to the initial token.

The electronic device may repeat the above-described operations until the number of target transformer blocks reaches the target number. When the number of target transformer blocks reaches the target number, the electronic device may obtain a second neural network model in which the target transformer blocks determined by the target number are transformed into operation blocks. The electronic device may obtain the second neural network model that is compressed from the first neural network model as the operation of the target transformer block is compressed.

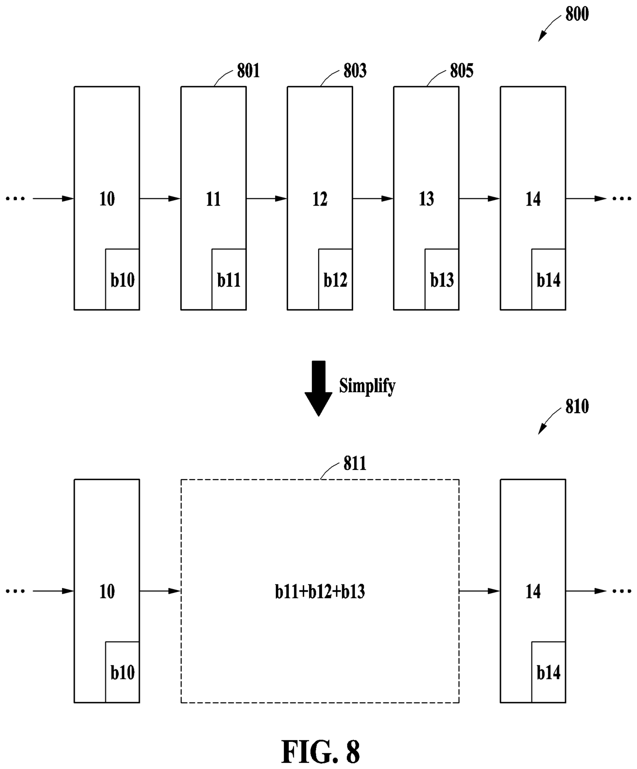

Referring to FIG. 8, a diagram showing only some of a plurality of transformer blocks included in a first neural network model 800 is illustrated. For example, only tenth to fourteenth transformer blocks in the neural network model of FIG. 4 are illustrated. However, this is merely an example and it is apparent to those skilled in the art that the description of the present disclosure may also be applied to neural network models having fewer or more than 20 transformer blocks.

According to an embodiment, at least some of the target transformer blocks determined by the target number may be consecutive. For example, among five target transformer blocks, three target transformer blocks (e.g., the eleventh, twelfth, and thirteenth transformer blocks) may be consecutive. The electronic device may transform the consecutive target transformer blocks into an operation block that performs an operation by merging the biases of the consecutive target transformer blocks. The electronic device may replace the consecutive target transformer blocks with the operation block that performs addition by merging the biases of the consecutive target transformer blocks.

Referring to a second neural network model 810 simplified (e.g., model compression) from the first neural network model 800, the electronic device may transform a transformer block 801, a transformer block 802, and a transformer block 803 into an operation block 811 that performs an operation based on b11, b12, and b13. The operation block 811 may perform an arithmetic operation (e.g., addition) based on b11, b12, and b13 with respect to the initial token among the inputs of the operation block 811. For example, the operation block 811 may perform the addition that adds b11 + b12 + b13 only for the initial token among the inputs of the operation block 811. An operation block transformed from one target transformer block and the operation block 811 transformed from consecutive target transformer blocks may be referred to as a first operation block and a second operation block, respectively, for the purpose of distinction.

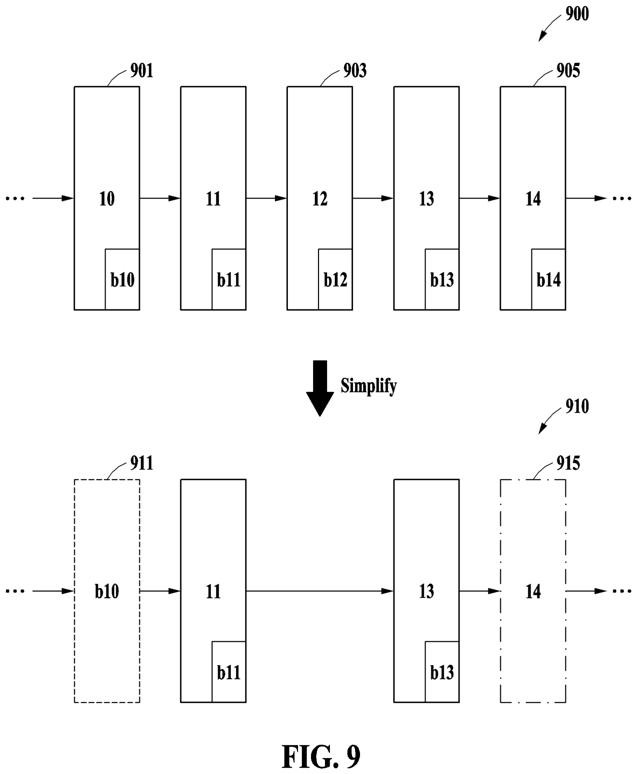

Referring to FIG. 9, a diagram showing only some of a plurality of transformer blocks included in a first neural network model 900 is illustrated. For example, only tenth to fourteenth transformer blocks in the neural network model of FIG. 4 are illustrated. However, this is merely an example and it is apparent to those skilled in the art that the description of the present disclosure may also be applied to neural network models having fewer or more than 20 transformer blocks.

According to an embodiment, the first neural network model 900 may be compressed into a second neural network model 910 by performing at least one of the unstructured pruning, the structural pruning, and the transformation into operation blocks for the target transformer blocks.

For example, it is assumed that a transformer block 901 has the least effect on the output of the first neural network model 900 when transformed into an operation block and is thus determined as the target transformer block. It is assumed that a transformer block 903 has the least effect on the output of the first neural network model 900 when the structural pruning is performed (e.g., the transformer block is removed) and is thus determined as the target transformer block. It is assumed that a transformer block 905 has the least effect on the output of the first neural network model 900 when the unstructured pruning is performed and is thus determined as the target transformer block.

When the target transformer block is determined using two or more compression methods, the electronic device may perform compression of the corresponding target transformer block based on the determined compression method.

For example, the electronic device may be compressed by transforming the transformer block 901 into an operation block 911. The electronic device may be compressed by performing the structural pruning of the transformer block 903. The electronic device may be compressed by the unstructured pruning of the transformer block 905.

Referring to the second neural network model 910, the second neural network model 910 may include the operation block 911 and a transformer block 915 on which the unstructured pruning is performed. Hereinafter, inference using the second neural network model 910 (e.g., a second LM or a second LLM) will be described.

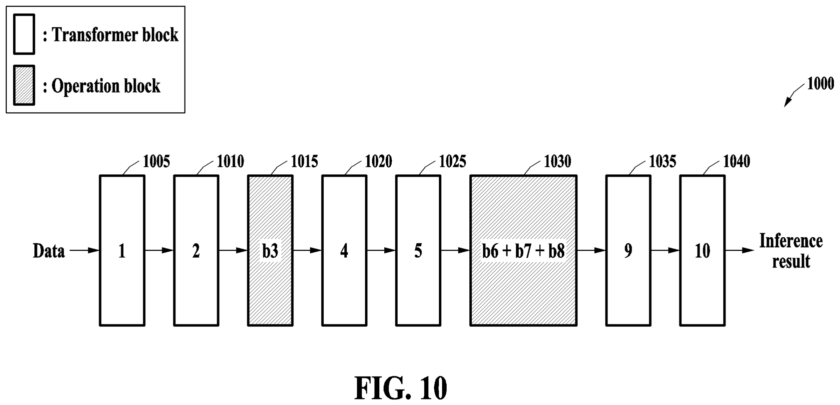

FIGS. 10 and 11 are diagrams illustrating inference using a second neural network model according to an embodiment.

Referring to FIG. 10, a second neural network model 1000 (e.g., an LM or an LLM) is illustrated. The second neural network model 1000 may represent a model in which a first neural network model is compressed according to the method described above with reference to FIGS. 6 to 9. The second neural network model 1000 of FIG. 10 is for describing the inference of a compressed neural network model and should not be construed as limiting other embodiments.

The second neural network model 1000 may be obtained or derived from a first neural network model including a plurality of transformer blocks. The second neural network model 1000 may be obtained by transforming at least one target transformer block determined based on the target number related to a compression degree of the first neural network model into one or more operation blocks 1015 and 1030. For example, a transformation process to obtain the second neural network model 1000 may include identifying and compressing certain transformer blocks from the a first neural network model based on a target compression ratio or target number of blocks, which defines the desired model size or computational efficiency. To achieve this, at least one target transformer block, that is selected from the first neural network model is replaced or transformed into one or more operation blocks 1015 and 1030. These operation blocks 1015 and 1030 may be lightweight computational modules that approximate or replace the function of the original transformer block with reduced complexity.

The second neural network model 1000 may include one or more transformer blocks (e.g., unchanged transformer blocks) 1005, 1010, 1020, 1025, 1035, and 1040 and the one or more operation blocks (e.g., transformed operation blocks) 1015 and 1030. The one or more transformer blocks 1005, 1010, 1020, 1025, 1035, and 1040 may be transformer blocks included in the first neural network model, which is a model before the second neural network model 1000 is compressed, and may not be transformed into the one or more operation blocks 1015 and 1030. The one or more operation blocks 1015 and 1030 may be blocks that are replaced with blocks determined as the target transformer block among a plurality of transformer blocks included in the first neural network model.

The one or more operation blocks 1015 and 1030 may perform an operation based on a predetermined value for an initial token among the inputs input to the operation block. For example, the one or more operation blocks 1015 and 1030 may perform simplified computations compared to transformer blocks. The operation block may apply arithmetic operations, such as applying an additive bias to an initial token. The one or more operation blocks 1015 and 1030 may perform addition that adds a predetermined value to an initial token corresponding to a first token based on the index of the input tokens. The one or more operation blocks 1015 and 1030 may perform the addition that adds a predetermined value only to the initial token. The predetermined value may be determined based on one or more biases replaced by at least one operation block. The bias may be determined based on a difference between an input and an output of the target transformer block.

The one or more operation blocks 1015 and 1030 may include at least one of a first operation block 1015 and a second operation block 1030.

The first operation block 1015 may include a predetermined value based on a bias of one target transformer block among the at least one target transformer block determined in the first neural network model. For example, the first operation block 1015 may be a block replaced by a third transformer block among the at least one target transformer block determined in the first neural network model, and may include a predetermined value (e.g., b3) based on the bias of the third transformer block. The first operation block 1015 may perform an operation such as Equation 1.

[Equation 1]

$$h_{l+1} = \begin{cases} h_l[k] + b_l & k = 0 \\ h_l[k] & k \neq 0 \end{cases}$$

It is assumed that the index of tokens starts from 0. The index of an initial token may be 0. $h_{l+1}$ may represent an output of an operation block positioned at a first position. $h_{l+1}$ may refer to an input of a (1 + 1)-th block (e.g., an operation block or a transformer block). k may represent the index of a token. $h_l[k]$ may refer to a value of a k-th token as an input to an operation block positioned at a first position. $b_l$ is a predetermined value of an operation block positioned at a first position and may represent a bias of a target transformer block (e.g., a transformer block positioned at the first position in the first neural network model) replaced with the operation block positioned at the first position.

When k is 0 (e.g., when it is an initial token), the operation block performs addition that adds a predetermined value (e.g., $b_l$) to the initial token. When k is not 0 (e.g., when it is a remaining token), the operation block may output the remainder token as it is. For example, the first operation block 1015 may be a compressed third transformer block, where 1 may be 3. The first operation block 1015 may perform addition that adds a predetermined value (e.g., b3) only to the initial token.

The second operation block may include a predetermined value based on the bias of two or more consecutive target transformer blocks among at least one target transformer block determined in the first neural network model. For example, the second operation block 1030 may include a predetermined value (e.g., b6 + b7 + b8) based on the bias of sixth to eighth transformer blocks among the at least one target transformer block determined in the first neural network model.

The electronic device may obtain data to be inferred using the second neural network model 1000. The data may include content such as at least one of an image, a text, a video, an audio, and code. For example, the data may include a plurality of sentences input to the second neural network model 1000 for translation. For example, the data may include an image that is input to the second neural network model 1000 to obtain a description of the image. However, the above-described data is an example for convenience of description and should not be construed as limiting other embodiments.

The electronic device may input data to the second neural network model 1000 including the one or more transformer blocks 1005, 1010, 1020, 1025, 1035, and 1040 and the one or more operation blocks 1015 and 1030. The second neural network model 1000 may receive data. In the second neural network model 1000, an inference result for data may be output. The second neural network model 1000 may output the inference result for data using fewer resources than the first neural network model. Tokens may be generated based on the data input to the second neural network model 1000. For example, the data may be processed into tokens and input to a transformer block. The position of tokens may be confirmed by the index indicating the position of the token. The one or more operation blocks 1015 and 1030 may receive tokens generated based on data as an input, and selectively perform operations based on the index of the tokens.

The second neural network model 1000 may output the inference result faster than the first neural network model. The second neural network model 1000 may output the inference result with higher accuracy than a neural network model compressed by performing structural pruning and/or unstructured pruning.

Referring to FIG. 11, a second neural network model 1100 is illustrated. The second neural network model 1100 may represent a neural network model in which the first neural network model is compressed according to the method described above with reference to FIGS. 6 to 9. The second neural network model 1100 of FIG. 11 is for describing the inference of the compressed neural network model and should not be construed as limiting other embodiments.

The second neural network model 1100 may be obtained or derived from the first neural network model including a plurality of transformer blocks. The second neural network model 1100 may include target transformer blocks 1115, 1125, and 1135 in which at least one target transformer block determined based on the target number related to a compression degree of the first neural network model is compressed.

The second neural network model 1100 may include one or more transformer blocks 1105, 1110, 1120, 1130, 1040, 1045, and 1150 and one or more compressed target transformer blocks 1115, 1125, and 1135. The one or more transformer blocks 1105, 1110, 1120, 1130, 1040, 1045, and 1150 may be original transformer blocks that are not transformed or converted into the one or more compressed target transformer blocks 1115, 1125, and 1135 included in the first neural network model, which is a model before the second neural network model 1100 is compressed. The one or more compressed target transformer blocks 1115, 1125, and 1135 may include at least one of an operation block 1115, a structurally pruned transformer block 1125, and an unstructured-pruned transformer block 1135.

Referring to FIG. 11, the one or more compressed target transformer blocks 1115, 1125, and 1135 may include the operation block 1115, the structurally pruned transformer block 1125, and the unstructured-pruned transformer block 1135. However, this is only an example for describing the second neural network model 1100 and should not be construed as limiting other embodiments. For example, it is apparent to those skilled in the art that the description of the present disclosure may also be applied to a case where only the operation block 1115 and the structurally pruned transformer block 1125 are included.

The at least one operation block 1115 may be a target transformer block transformed into the operation block 1115 that is a target compression scheme. The at least one operation block 1115 may perform an operation based on a predetermined value for an initial token among the inputs input to the operation block. The at least one operation block 1115 may perform addition that adds a predetermined value only to the initial token. The detailed description of the addition performed by the operation block is provided above with reference to FIGS. 7 and 10 and is thus omitted.

The at least one operation block 1115 may include at least one of a first operation block and a second operation block. The detailed description of the first operation block and the second operation block is provided above with reference to FIG. 10 and is thus omitted. Although the second neural network model 1100 does not illustrate the second operation block, this is an example and should not be construed as limiting other embodiments. For example, the second neural network model may include at least one of the first operation block, the second operation block, the structurally pruned transformer block 1125, and the unstructured-pruned transformer block 1135.

The second neural network model 1100 may include at least one of the structurally pruned transformer block 1125 and the unstructured-pruned transformer block 1135. The structurally pruned transformer block 1125 may be a compressed target transformer block based on the structural pruning, which is a target compression method. The unstructured-pruned transformer block 1135 may be a compressed target transformer block based on the unstructured pruning, which is a target compression method.

The structural pruning may be a method of directly removing entire layers or channels, or a method of removing a weight in a specific pattern. The unstructured pruning is a method of removing an individual weight, and may be a method of removing a weight with a value less than a threshold value. The detailed description of the structural pruning and the unstructured pruning is provided above with reference to FIG. 3 and is thus omitted.

The method of determining the target transformer block to perform at least one of the structural pruning, the unstructured pruning, and the transformation into an operation block in the first neural network model and determining a target compression method is described above with reference to FIG. 6, and a detailed description thereof will be omitted.

The electronic device may obtain data to be inferred using the second neural network model 1100. The data may include content such as at least one of an image, a text, a video, an audio, and code. For example, the data may include a plurality of sentences input to the second neural network model 1100 for translation. For example, the data may include an image that is input to the second neural network model 1100 to obtain a description of the image. However, the above-described data is an example for convenience of description and should not be construed as limiting other embodiments.

The electronic device may include the one or more transformer blocks 1105, 1110, 1120, 1130, 1040, 1045, and 1150 and one or more compressed target transformer blocks. The one or more compressed target transformer blocks may include at least one of the operation block 1115, the structurally pruned transformer block 1125, and the unstructured-pruned transformer block. The operation block 1115 may include at least one of a first operation block and a second operation block.

The electronic device may input data to the second neural network model 1100 including the one or more transformer blocks 1105, 1110, 1120, 1130, 1040, 1045, and 1150 and the one or more compressed target transformer blocks 1115, 1125, and 1135. The second neural network model 1100 including the one or more transformer blocks 1105, 1110, 1120, 1130, 1040, 1045, and 1150 and the one or more compressed target transformer blocks 1115, 1125, and 1135 may receive the data.

The second neural network model 1100 may output an inference result for the data. The second neural network model 1100 may output the inference result for a target input using fewer resources than the first neural network model. The second neural network model 1100 may output the inference result faster than the first neural network model. The second neural network model 1100 may output the inference result with higher accuracy than a neural network model compressed by performing structural pruning or unstructured pruning.

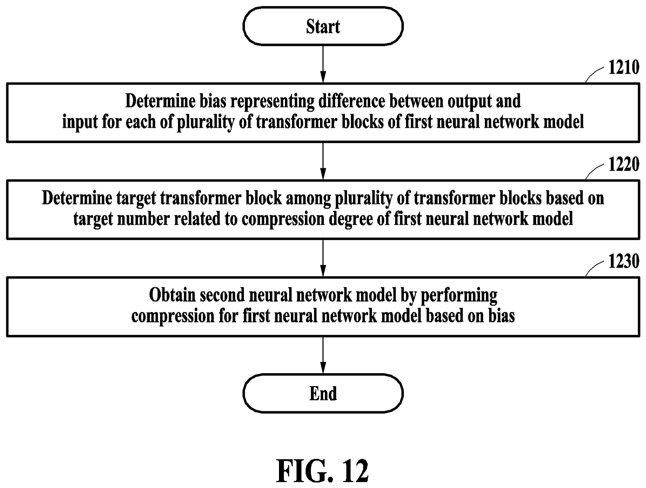

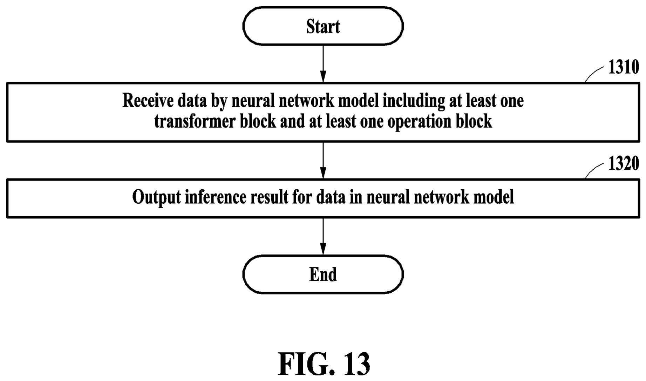

FIGS. 12 and 13 are flowcharts illustrating a method of operating an electronic device according to an embodiment.

Referring to FIG. 12, a flowchart illustrating operations of an electronic device for performing compression of a first neural network model is illustrated.

In the following embodiments, operations may be performed sequentially, but not necessarily performed sequentially. For example, the order of the operations may be changed and at least two of the operations may be performed in parallel. Operations shown in FIG. 12 may be performed by at least one component of an electronic device. For example, the electronic device may include a memory that stores instructions. When the instructions are executed individually and/or collectively by at least one processor, the electronic device may perform the following operations.

In operation 1210, the electronic device may determine a bias for each of a plurality of transformer blocks of a first neural network model. The bias may represent a difference between an output and an input of each transformer block.

In operation 1220, the electronic device may determine a target transformer block among the plurality of transformer blocks based on a target number (e.g., a target number of transformer blocks or a target compression level) related to a compression degree of the first neural network model.

In operation 1230, the electronic device may obtain a second neural network model by performing compression (e.g., structured or unstructured pruning) on the first neural network model based on the bias.

Operations 1210 to 1230 have been described above in detail with reference to FIGS. 1 to 11 and therefore the detailed description thereof will be omitted.

Referring to FIG. 13, a flowchart illustrating inference using a neural network model (e.g., the second neural network model) is illustrated.

In the following embodiments, operations may be performed sequentially, but not necessarily performed sequentially. For example, the order of the operations may be changed and at least two of the operations may be performed in parallel. Operations shown in FIG. 13 may be performed by at least one component of an electronic device. For example, the electronic device may include a memory that stores instructions. When the instructions are executed individually and/or collectively by at least one processor, the electronic device may perform the following operations.

In operation 1310, the electronic device may cause a neural network model including at least one transformer block and at least one operation block to receive data.

The electronic device may input the data to the neural network model including the at least one transformer block and the at least one operation block.

In operation 1320, the electronic device may output an inference result for the data in the neural network model.

The at least one operation block may receive tokens generated based on the data as an input. The at least one operation block may selectively perform the operation for at least some of tokens based on the index of tokens.

Operations 1310 and 1320 have been described above in detail with reference to FIGS. 1 to 11 and therefore the detailed description thereof will be omitted.

The present disclosure provides a method of compressing a neural network model while maintaining performance of the neural network model by performing an operation on an initial token even when most of operations of transformer blocks are omitted based on the phenomenon that the neural network model pays high attention to the initial token.

The present disclosure may allow the compressed neural network model to be executed in various devices with limited hardware resources, such as a smartphone, a head-mounted display (HMD), a personal computer (PC), and a tablet PC, by compressing the size while maintaining the performance of the neural network model.

The embodiments described herein may be implemented using a hardware component, a software component, and/or a combination thereof. A processing device may be implemented using one or more general-purpose or special-purpose computers, such as, for example, a processor, a controller and an arithmetic logic unit (ALU), a DSP, a microcomputer, an FPGA, a programmable logic unit (PLU), a microprocessor or any other device capable of responding to and executing instructions in a defined manner. The processing device may run an OS and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and/or multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and/or DVDs; magneto-optical media such as optical discs; and hardware devices that are specially configured to store and perform program instructions, such as read-only memory (ROM), RAM, flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, a person skilled in the art may apply various technical modifications and variations based thereon. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and equivalents to the claims are also within the scope of the following claims.

**Claims**

1. A method of operating an electronic device, the method comprising:

   receiving data by a neural network model comprising at least one transformer block and at least one operation block; and
   outputting an inference result for the data in the neural network model,
   wherein the at least one operation block is configured to receive tokens generated based on the data as an input, and to selectively perform an operation on at least one of the tokens based on an index of the tokens;
   wherein preferably the operation comprises an arithmetic operation.

2. The method of claim 1, wherein the at least one operation block is configured to perform the operation on an initial token corresponding to a first token based on the index of the tokens.

3. The method of any one of the preceding claims, wherein the at least one operation block is configured to output remaining tokens, other than an initial token corresponding to a first token, without modification, based on the index of the tokens.

4. The method of any one of the preceding claims, wherein the operation is an addition operation that adds a predetermined value to an initial token corresponding to a first token based on the index of the tokens;
   wherein preferably the predetermined value is determined based on one or more biases representing a difference between an output and an input of one or more target transformer blocks replaced with the at least one operation block.

5. A method of operating an electronic device, the method comprising:

   determining a bias representing a difference between an output and an input for each of a plurality of transformer blocks of a first neural network model;
   determining a target transformer block among the plurality of transformer blocks based on a target number of transformer blocks related to a compression degree of the first neural network model; and
   obtaining a second neural network model by performing compression on the first neural network model based on the bias.

6. The method of claim 5, wherein

   the second neural network model comprises a first operation block replaced from the target transformer block through the compression, and
   the first operation block is configured to perform an operation based on the bias of the target transformer block corresponding to the first operation block.

7. The method of claim 6, wherein the first operation block is configured to perform an addition operation based on the bias of the target transformer block replaced with the first operation block for an initial token among inputs of the first operation block, and to transmit a result of performing the addition operation to a next layer.

8. The method of any one of the preceding claims 5-7, wherein, based on at least two target transformer blocks determined by the target number, being consecutive target transformer blocks, the second neural network model comprises a second operation block, in which the consecutive target transformer blocks performing an operation are replaced by merging the biases of the consecutive target transformer blocks.

9. The method of any one of the preceding claims 5-8, wherein the obtaining of the second neural network model comprises generating the second neural network model by performing structural pruning on at least one of the target transformer blocks determined by the target number in the first neural network model; and/or
   wherein the obtaining of the second neural network model comprises generating the second neural network model by performing unstructured pruning on at least one of the target transformer blocks determined by the target number in the first neural network model.

10. The method of any one of the preceding claims 5-9, further comprising:

    determining the target number related to the compression degree of the first neural network model in the first neural network model,

wherein the determining of the target number comprises determining the target number based on hardware resources of a target device to execute the second neural network model obtained by performing the compression on the first neural network model.

11. The method of any one of the preceding claims 5-10, wherein the determining of the target transformer block comprises:

determining whether a currently determined number of target transformer blocks has reached the target number; and

based on the currently determined number of the target transformer blocks determined having not reached the target number, determining an additional target transformer block based on results of sequentially transforming any one of remaining transformer blocks, excluding the target transformer block determined so far, into a first operation block that only performs an addition operation on an initial token;

wherein preferably the determining of the additional target transformer block comprises determining, as the target transformer block, the remaining transformer block that has a least effect on an output of the first neural network model when being transformed into the first operation block.

12. An electronic device comprising:

a memory configured to store instructions; and

at least one processor configured to execute the instructions,

wherein the instructions, when executed by the at least one processor individually or collectively, cause the electronic device to:

receive data by a neural network model comprising at least one transformer block and at least one operation block; and

output an inference result for the data in the neural network model,

wherein the at least one operation block is configured to receive tokens generated based on the data as an input, and to selectively perform an operation on at least one of the tokens based on an index of the tokens;

wherein preferably the operation comprises an arithmetic operation.

13. The electronic device of claim 12, wherein the at least one operation block is configured to perform the operation on an initial token corresponding to a first token based on the index of the tokens.

14. The electronic device of any one of the preceding claims 12-13, wherein the at least one operation block is configured to output remaining tokens other than an initial token corresponding to a first token, without modification, based on the index of the tokens.

15. The electronic device of any one of the preceding claims 12-14, wherein the operation is an addition operation that adds a predetermined value to an initial token corresponding to a first token based on the index of the tokens; wherein preferably the predetermined value is determined based on one or more biases representing a difference between an output and an input of one or more target transformer blocks replaced with the at least one operation block.

**FIG. 1**

FIG. 2

**FIG. 3**

400

401 412 402 413 403 420

I
have
a meeting
today
.

1     2     3    ...    20

# FIG. 4

500

| Llama2-7B (Third Transformer Block) | Similarity | |
|---|---|---|
| | Zeroth token | Fourth token |
| Cosine similarity with first batch (↑) | 0.99 | 0.18 |
| Euclidean distances with first batch (↓) | 0.06 | 2.51 |

# FIG. 5

Start

Determine number (N) of transformer blocks
to be simplified — 610

Determine bias of each transformer block
by initializing first neural network model — 620

Number of
target transformer
blocks = N? — 630 — Yes

No

Determine target transformer block — 640

Simplify target transformer block — 650

End

# FIG. 6

**FIG. 7**

700

701

10 b10 · · ·
11 b11
12 b12
13 b13
14 b14 · · ·

Simplify

710

713
711

10 b10 · · ·
11 b11
b12
13 b13
14 b14 · · ·

Simplify

720

721
711

10 b10
11 b11
b12
13 b13
b14 · · ·

y0
y1
y2
y3
· · ·
yk

y0+b12
y1
y2
y3
· · ·
yk

11
b12
13

800

801 803 805

··· → | 10 | → | 11 | → | 12 | → | 13 | → | 14 | → ···

b10    b11    b12    b13    b14

**⬇ Simplify**

810

811

··· → | 10 | → | b11+b12+b13 | → | 14 | → ···

b10              b14

# FIG. 8

900

901 903 905

... → | 10 / b10 | → | 11 / b11 | → | 12 / b12 | → | 13 / b13 | → | 14 / b14 | → ...

**Simplify**

910

911 915

... → | b10 | → | 11 / b11 | → | 13 / b13 | → | 14 | → ...

# FIG. 9

1000

Data → | 1 | → | 2 | → | b3 | → | 4 | → | 5 | → | b6 + b7 + b8 | → | 9 | → | 10 | → Inference result

1005  1010  1015  1020  1025  1030  1035  1040

☐ : Transformer block

▨ : Operation block

**FIG. 10**

☐ : Transformer block   ▨ : Transformer block on which structural pruning is performed

▨ : Operation block   ▦ : Transformer block on which unstructured pruning is performed

1100

Data → 1 → 2 → b3 → 4 → 5 → 6 → 7 → 8 → 9 → 10 → Inference result

1105  1110  1115  1120  1125  1130  1135  1140  1145  1150

**FIG. 11**

Start

Determine bias representing difference between output and
input for each of plurality of transformer blocks of first neural network model — 1210

Determine target transformer block among plurality of transformer blocks based on
target number related to compression degree of first neural network model — 1220

Obtain second neural network model by performing
compression for first neural network model based on bias — 1230

End

**FIG. 12**

Start

Receive data by neural network model including at least one
transformer block and at least one operation block — 1310

Output inference result for data in neural network model — 1320

End

# FIG. 13

Europäisches
Patentamt

European
Patent Office

Office européen
des brevets

## EUROPEAN SEARCH REPORT

**Application Number**

EP 25 21 0323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHANGQIAN GAO ET AL: "DISP-LLM: Dimension-Independent Structural Pruning for Large Language Models", ARXIV.ORG, CORNELL UNIVERSITY LIBRARY, 201 OLIN LIBRARY CORNELL UNIVERSITY ITHACA, NY 14853, 15 October 2024 (2024-10-15), XP091911111, | 1-6,8-15 | INV. G06N3/0455 G06N3/082 G06N3/0495 G06N3/02 |
| A | * the whole document * ----- | 7 | |

**TECHNICAL FIELDS SEARCHED (IPC)**

G06N

The present search report has been drawn up for all claims

| Place of search | Date of completion of the search | Examiner |
|---|---|---|
| The Hague | 28 January 2026 | Nourestani, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................
& : member of the same patent family, corresponding document

EPO FORM 1503 03.82 (P4C01)